# EUROPEAN PATENT APPLICATION

(11) **EP 3 013 002 A1**
(43) Date of publication of application: **27.04.2016**
(21) Application number: 15190912.4
(22) Date of filing: 21.10.2015
(51) Int. Cl.: H04L 12/26, H04L 29/08

(54) **METHOD AND SYSTEM FOR DEEP STATS INSPECTION (DSI) BASED SMART ANALYTICS FOR NETWORK/SERVICE FUNCTION CHAINING**

(30) Priority: 24.10.2014 WO PCT/CN2014/089463
(71) Applicant: ZTE Corporation, Shenzhen city, Guangdong 518057 (CN)
(72) Inventor: KHASNABISH, Bhumip, Lexington, MA Massachusetts 02421 (US); MENG, Wei, 21000 Yuhuatai Nanjing (CN)
(74) Representative: Awapatent AB

(57) **Abstract**

A method and system for deep stats inspection (DSI)-based smart analytics for service function chaining (SFC) in a virtualized network/service environment are described. DSI assists the service function forwarder (SFF) to analyze the path, routing, processing history, forecasted transit nodes and destination of packet-streams. The SFF can be physical or virtual or a combination of both in the chained path. The packet streams can have a header or a trailer that may carry (a) a profile of the service that is generating the traffic being carried by the packet-stream/flow, and (b) a signature of the expected and traversed chain, path or route. The profile and the signature can be in the form of statistical information and can help the current SFF make intelligent chaining and forwarding decisions. The methods and systems described can help fulfill both end-to-end network and service (quality, customers experience, etc.) expectations. DSI can also be utilized for service chaining in multi-tenant environments (data centers), automated load balancing (ALB), and automated disaster recovery (ADR).

## Description

### FIELD OF THE INVENTION

The present invention relates to deep stats inspection (DSI)-based smart analytics for service function chaining (SFC) for a flow (a stream of packets) in a virtualized network/service environment. The invention can be applied to a chain, i.e., an ordered sequence of network/service function entities. The invention can also be applied to any unordered sequence (a group) of network/service entities. The stats can be embedded in a packet-stream's (flow's) header or trailer or both where the stats and signature can be carried throughout the trajectory of flow in the network. The invention helps fulfill both end-to-end network and service (quality, customers experience, etc.) expectations. DSI can also be utilized for service chaining in multi-tenant (data centers) environment, automated load balancing (ALB), and automated disaster recovery (ADR).

### BACKGROUND

Traditional service function chaining (SFC) refers to directing a flow (or a stream of packets) through an ordered set of service functions like load balancer, firewall, address translator, service quality management, etc. without routing the flow back and forth from a distant physical service (value-added) device which causes wastage of network resources (bandwidth, processing power, space, power, etc.). When virtualized service functions (SF) are used, a network functions (NF) operator can dynamically create and manage SF chains based on applications and services demands.

A recent IETF draft (available at datatracker.ietf.org/doc/draft-ietf-sfc-problem-statement/) discusses the issues associated with service function chaining. Another IETF document (available at datatracker.ietf.org/doc/draft-meng-sfc-broadband-usecases/) describes usages of service function chaining in different scenarios in broadband networks. It is understood in the art that without proper classification, pre-processing and inspection of the flows, the service function chain that a flow uses may not fully effective.

These issues are addressed with deep stats for packet streams of flows, which usually involves collecting information about (a) path for packet streams or flows and (b) resource usage along the path. Then, the behavior and pattern of resources are analyzed. A random grouping of network /service functions is commonly utilized for load distribution and balancing. Sequential grouping of network/service functions is commonly utilized for service chaining (ordered processing).

Traditional deep packet inspection (DPI) can help service chaining and load balancing only to a certain extent because the actions are taken only after inspecting the packet (header, trailer, payload, etc.)

The intelligence obtained from DSI and DPI can be utilized for cost-effective and efficient management of (a) the time packets/flows spend in the network and (b) physical and virtualized network resources. Virtual resources management in the context of Cloud and Data Center (DC) environment using unified API has been discussed in an IETF draft (available at tools.ietf.org/html/draft-iunsheng-opsawg-virtual-resource-management-00).

It is known in the art that resources in virtualized multi-technology and multi-admin domain environments are orchestrated. Once physical nodes and physical links are upgraded to higher capacity (via interconnection of third-party friendly networks or capital investment), the stored deep stats may need to be updated. Hence the generic lifecycle management of the deep stats is very important for efficient and effective service delivery.

Security considerations may arise in various networks using virtualization and separation of control and transport (and forwarding). While these open up the possibility of supporting greater flexibility and scalability, the network resources may become more vulnerable to abuse and spoofing. For example, the security considerations for virtualized resources in DC environment can be found in an IETF daft (http://tools.ietf.org/html/draft-karavettil-vdcs-security-framework-05).

This patent application discusses the use of DSI based analytics for network/service function chaining with an objective to satisfy end-to-end network and service (quality, customers experience) expectations. DSI can also be utilized for service chaining in multi-tenant (Data centers) environment, automated load balancing (ALB), and automated disaster recovery (ADR).

### BRIEF SUMMARY

An aspect of the invention is a method for deep stats inspection based on smart analytics of packet streams. The method comprises (1) gathering intelligence about the conditions of one or more of a service function, a network function, a service function forwarder or a network function forwarder; (2) storing the intelligence in a database; (3) coding the intelligence for utilization by a flow classifier; and (4) embedding the intelligence in a header or a trailer or both the header and trailer of the one or more packet streams. The intelligence provides historical and predicted information about the life-cycle of packets and flows in the network.

Another aspect of the invention is a system for deep stats inspection based on smart analytics of packet streams. The system comprises one or more of a service function, one or more of a service function forwarder, one or more of a network function forwarder, one or more of a network function, and a flow classifier.

Additional aspects and advantages of the invention will appear from the drawings and the detailed description.

### BRIEF DESCRIPTION OF THE DRAWINGS

Embodiments of the present invention are illustrated by way of the accompanying drawings, in which:
Figure 1 shows a traditional flow (or packet stream) classifier and the traditional operation of a flow pre-processing (classification) based service and network function chaining.
Figure 2 illustrates a smart (with coded intelligence) flow (or packet stream) classifier encompassed by the invention in which additional intelligence can be incorporated into the flow classification phase of flow processing. The 'Adaptive Policy Database' dynamically incorporates the knowledge about the operations of the SFs/NFs through monitoring the SFFs/NFFs and providing coded intelligence to the classifier for use in the decision making of flow classification.
Figure 3 shows a smart flow classifier for network and service function group processing. As shown in this diagram, a flow can be routed to an SF through an NFF in addition to being routed directly from an SFF.
Figure 4 shows a smart flow classifier for processing of chained and clustered service and network functions. This diagram shows a mode of operation where SFFs are receiving flows from the egress of the classifier for chaining to the SFs through both SFFs and NFFs.
Figure 5 illustrates the deep stats inspection based on pre- and post-processing of flows for service function chaining. It is noted that if a flow cannot be routed through the desired outgoing path, both the profile (impairment count) and the signature are updated in the post-processor before directing a flow to the Service/Network Function Forwarder (SFF/NFF).

### DETAILED DESCRIPTION

An aspect of the invention is a method for deep stats inspection based on smart analytics of packet streams. Intelligence is gathered about the conditions of one or more of a service function, a network function, a service function forwarder (SFF) or a network function forwarder (NFF). The intelligence is stored in a database. The intelligence is coded for utilization by a flow classifier. The intelligence is embedded in a header or a trailer or both the header and trailer of the one or more packet streams. The method may be practiced by having these steps practiced in succession. The intelligence provides historical and predicted information about the life-cycle of packets and flows in the network.

The information obtained from the method can then be used for further analytics and processing of flows and packets. The deep stats undertaken on the embedded intelligence can reveal (a) where the packet streams or flows came from (logical and physical addresses and geo-location), (b) how they moved through the network nodes and links (expected and actual traversed links and nodes) (c), how the resources usage changed over time (average, variance, standard deviation, etc. of duration and amount of usage of process, CPU, memory, storage, buffer, bandwidth, etc. resources), and (d) how the movements have changed over time for different time periods, etc. (variation from expected impairments for N^{th} order statistics for all of the impermanent budgets). These deep stats can be stored in a database for real-time and off-line processing for both highly efficient service chaining, load balancing, disaster recovery, capacity planning and performance engineering purposes.

Packets are blocks of user data that have the necessary address and administration information attached. Such can be attached in a header or a footer that allows the network to deliver the packet to the correct destination. Packets are transmitted in a flow at a transmission rate that depends on the packet size and the gap in transmission between each packet. The transmission rate of data packets also can depend on the capacity of the network connection and processor capability of the transmitting device.

It is appreciated that comprehensive deep stats knowledge help achieve load balancing dynamically and efficiently so as to improve (a) resource utilization and (b) user experience and satisfaction.

In some embodiments of this aspect, the predicted information is based on one or more of estimation and time series analysis. Also, a least squares fit can be used on historical data. For example, time series analysis can be performed on historical data so as to obtain a prediction about the life-cycle of packets and flows in the network. Alternatively, estimation, least squares fit or any number of other statistical methods can be performed on historical data so as to prepare predicted data. Such predicted data can be included in the intelligence that is embedded in a header or a trailer or both the header and trailer of the one or more packet streams.

In some embodiments of this aspect, the one or more packet streams pass through a series of service functions (SF). Any number of service functions can be used.

In some embodiments of this aspect, the one or more packet streams pass through a series of network functions (NF). Any number of network functions can be used.

In some embodiments of this aspect, the one or more packet streams pass through a combination of service functions and network functions. The combination may entail any number of service functions and any number of network functions. There may be 1, 2, 3, 4, 5, 6, 7, 8, 9 or 10 or any integer between and including 1 to 100 of service functions. There may be 1, 2, 3, 4, 5, 6, 7, 8, 9 or 10 or any integer between and including 1 to 100 of network functions. The packet streams may pass initially through a service function before passing through a network function. Alternatively, the packet streams may pass initially through a network function before passing through a service function. The packet streams can pass through a series of network functions and then a series of service functions, or vice versa.

It is noted that both SF/SFF and NF/NFF can be physical or virtual or a combination of both in the path of the service chain. It is not required that the classifier has any knowledge of the loading or other conditions of any of the forwarders (SFF or NFF) which may cause serious performance and service bottlenecks or impairments in user experience.

A database, such as an adaptive policy database, may dynamically incorporate the knowledge about the operations of the SFs/NFs through monitoring the SFFs/NFFs and provide coded intelligence to the classifier for use in the decision making of flow classification. Intelligence about health, security, loading, etc. conditions of SFFs, NFFs, SFs and NFs are gathered and stored in a database and then coded in manner that can be easily utilized by the flow classifier during inspection of the tags/stats of the incoming flows and can be adjusted accordingly without impacting user/service experience. This database provides inputs directly to the flow director/classifier for dynamically adjusting the tags/stats of the incoming flows.

In some embodiments of this aspect, the header or the trailer comprise a profile of a service that is generating network traffic and a signature of a chain or path or route of where the one or more packet streams have traversed and where the one or more packet streams are expected to traverse. A header is supplemental data placed at the beginning of a packet or packet stream. A trailer is supplemental data placed at the end of a packet or packet stream. With regard to the intelligence embedded in a header, trailer, etc. of packet stream, the embedded intelligence may be in a network and in the form of a stat and or a signature. The stat or the signature may be carried through a trajectory of flow in the network.

In some embodiments of this aspect, the method further comprises predicting a lifecycle or a future flow of packet streams in the network, or a lifecycle and a future flow of packet streams in the network. The method may further comprise predicting a lifecycle. The method may further comprise predicting a future flow of packet streams in the network. The method may further comprise predicting a lifecycle and a future flow of packet streams in the network. A service function forwarder or a network function forwarder may utilize the predicted lifecycle or future flow of packet streams in the network, or the predicted lifecycle and future flow of packet streams in the network, to make intelligent chaining and forwarding decisions.

In some embodiments, the conditions of one or more of a service function, a network function, a service function forwarder or a network function forwarder comprises behavior and pattern of usage of a resource. Some service functions manipulate the session flow between client and application platforms, with examples of such manipulation including observing, altering, terminating or reestablishing session flows. Service functions can be used to protect the network and user privacy, such as encryption and decryption. Service functions may also be chained.

In various embodiments, the conditions of one or more of a service function, a network function, a service function forwarder or a network function forwarder comprises behavior and pattern of one or more errors of a resource. Various resources known in the art can be used. For instance, the resource can be one or more of a process, a CPU, a memory, a storage, a buffer, or a bandwidth.

In some embodiments, the conditions of one or more of a service function, a network function, a service function forwarder or a network function forwarder comprises behavior and pattern of one or more reroute logs of a resource. Various resources known in the art can be used. For instance, the resource can be one or more of a process, a CPU, a memory, a storage, a buffer, or a bandwidth.

In various embodiments, the intelligence comprises one or more of i) an origin of the one or more packet streams; ii) a first history of how the one or more packet streams moved through network nodes or links, or network nodes and links; iii) a second history of how the use of resources changed over time; and iv) a third history of how the movements of the one or more packet streams changed over time for different time periods. The origin of the one or more packet streams may be a local address. The origin of the one or more packet streams may be a physical address. The origin of the one or more packet streams may be a geo-location. The first history of how the one or more packet streams moved through network nodes or links, or network nodes and links, may comprise an expected traversal of network links or network nodes, or network links and network nodes. Alternatively, the first history of how the one or more packet streams moved through network nodes or links, or network nodes and links, may comprise an actual traversal of network links or network nodes, or network links and network nodes. The second history of how the use of resources changed over time may comprise an average of duration and amount of usage of one or more of process resources, CPU resources, memory resources, storage resources, buffer resources, and bandwidth resources. Alternatively, the second history of how the use of resources changed over time may comprise a variance of duration and amount of usage of one or more of process resources, CPU resources, memory resources, storage resources, buffer resources, and bandwidth resources. As yet another alternative, the second history of how the use of resources changed over time may comprise a standard deviation of duration and amount of usage of one or more of process resources, CPU resources, memory resources, storage resources, buffer resources, and bandwidth resources.

Another aspect of the invention is a system for deep stats inspection based on smart analytics of packet streams. The system comprises one or more of a service function, one or more of a service function forwarder, one or more of a network function forwarder, one or more of a network function, and a flow classifier.

In some embodiments of this system, the flow classifier receives a packet stream comprising coded intelligence. Coded intelligence may be derived from monitoring the health, loading, security, etc. of the SFFs and NFFs. As far as granularity is concerned, one possibility is for health to be one of frail, modest, steady, loading to be one of low, medium and high, and security to be one of at-risk, vulnerable and safe. The monitoring frequency can be preconfigured to a default value or dynamically adjusted based on any set of criteria.

The flow classifier may route the packet stream comprising coded intelligence though one or more of the service functions. The flow classifier may route the packet stream comprising coded intelligence though one or more of the service function forwarders. The flow classifier may route the packet stream comprising coded intelligence though one or more of the network function forwarders. The flow classifier may route the packet stream comprising coded intelligence though one or more of the network functions.

The flow classifier may route the packet stream comprising coded intelligence though one or more of the service function forwarders and one or more of the service functions. The flow classifier may route the packet stream comprising coded intelligence though one or more of the network function forwarders, one or more of the service function forwarders, one or more of the service functions, and one or more of the network functions.

Flow can be routed to an SF through an NFF in addition to being routed directly from an SFF. The SFF can process the incoming flows in a round-robin fashion or on a first-come-first-serve basis or using any other intelligent incoming flow processing mechanism. The stats tag of the flows can be utilized for intelligent servicing of the flows in the service function (SFs) which can be physical or virtual or a combination of both.

In various embodiments, the packet stream comprises a header, a packet signature, a packet payload, a packet profile and a trailer. The packet signature may comprise one or more of (1) a history of how the one or more packet streams moved through network nodes or links, or network nodes and links, and (2) an expected path of the packet through network nodes or links, or network nodes and links. The packet profile may comprise a historical statistic of a packet property. The packet property may be delay, jitter, hop-count or deflection suffered.

### EXAMPLES

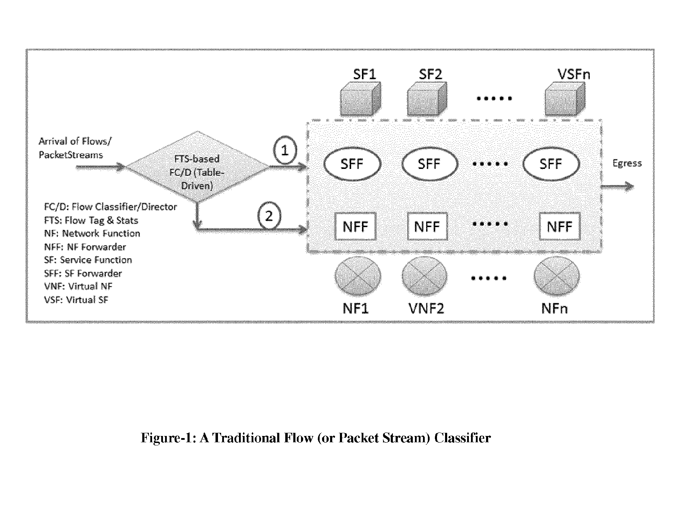

Figure 1 shows a traditional flow (or packet stream) classifier. This diagram shows the traditional operation of a flow pre-processing (classification) based service and network function chaining. The incoming flows are categorized based on the tags associated with the flows. In addition, minor stats that may be available in the flow's header may be utilized. The categorized flows are sent through a series of service functions (SFs) or through the network functions (NFs) as shown in the diagram. The tags and stats of the incoming flows are neither adjusted (nor any alternatives are defined) based on the loading and networking conditions of the SFs or NFs to which the SFF/NFF (SF Forwarder / NF Forwarder) forwards the flows. This may cause serious performance and service bottlenecks (or impairments in user experience).

It is noted that both SF/SFF and NF/NFF can be physical or virtual or a combination of both in the path of the service chain. The classifier usually does not have any knowledge of the loading or other conditions of any of the forwarders (SFF or NFF) which may cause serious performance and service bottlenecks or impairments in user experience.

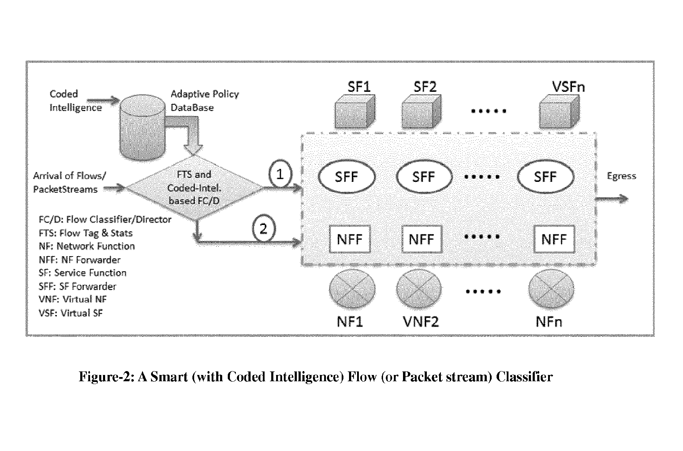

Figure 2 describes a smart (with coded intelligence) flow (or packet stream) classifier. This diagram shows how additional smartness can be incorporated in the flow classification phase of flow processing. The 'Adaptive Policy Database' dynamically incorporated the knowledge about the operations of the SFs/NFs through monitoring the SFFs/NFFs and provides coded intelligence to the classifier for use in the decision making of flow classification. Intelligence about health, security, loading, etc. conditions of SFFs, NFFs, SFs and NFs are gathered and stored in a database and then coded in manner that can be easily utilized by the flow classifier during inspection of the tags/stats of the incoming flows and can be adjusted accordingly without impacting user/service experience. This database provides inputs directly to the flow director/classifier for dynamically adjusting the tags/stats of the incoming flows.

Coded intelligence is derived from monitoring (health, loading, security, etc. conditions) the SFFs and NFFs. The following is one possibility for defining the granularity of monitoring of the conditions.
SFF (or NFF) Health condition = {frail, modest, steady}
SFF (or NFF) Loading condition = {low, medium, high}
SFF (or NFF) Security condition = {at-risk, vulnerable, safe}
The monitoring frequency can be preconfigured to a default value or dynamically adjusted based on ay set of criteria.

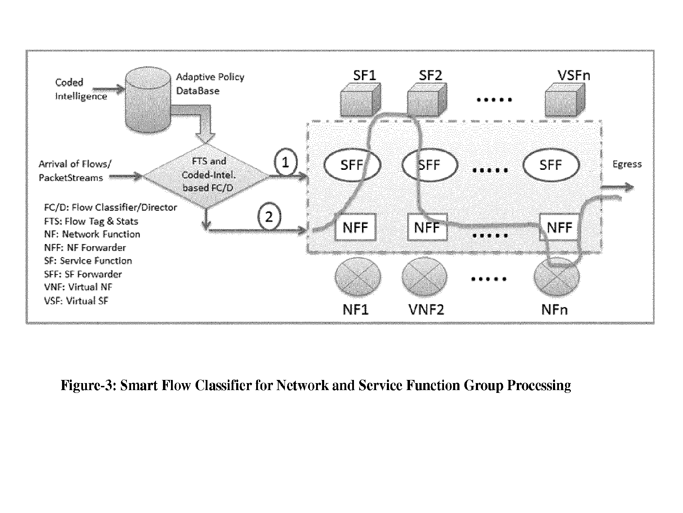

Figure 3 shows smart flow classifier for network and service function group processing. As shown in this diagram, a flow can be routed to an SF through an NFF in addition to being routed directly from an SFF. The SFF can process the incoming flows in a round-robin fashion or on a first-come-first-serve basis or using any other intelligent incoming flow processing mechanism. The stats tag of the flows can be utilized for intelligent servicing of the flows in the service function (SFs) which can be physical or virtual or a combination of both.

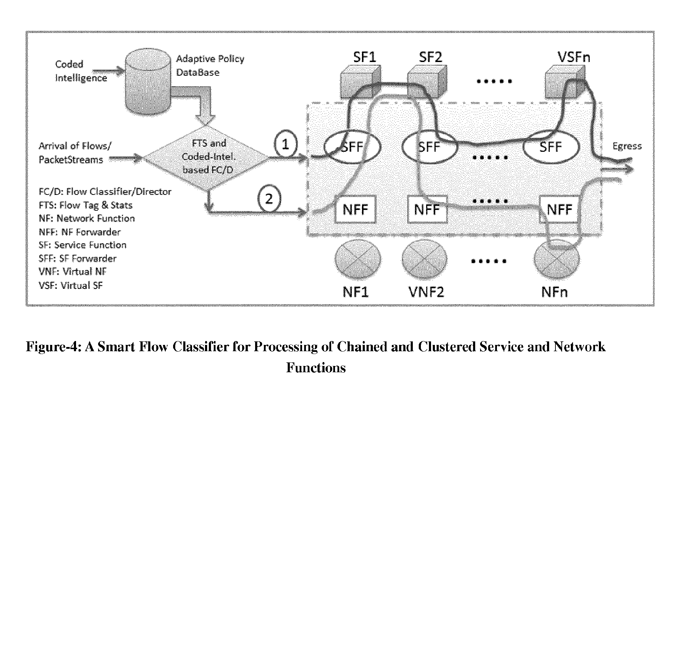

Figure 4 shows smart flow classifier for processing of chained and clustered service and network functions. This diagram shows a mode of operation where SFFs are receiving flows from the egress of the classifier for chaining to the SFs through both SFFs and NFFs. As shown in the diagram, the different flows pass through a series of SFs or a combination of SFs and NFs. It is noted that SF1 and SF2 carry different flows and hence the loading condition of these two SFs are different from those of the other SFs here. As more and more flows demand processing through SF1 and SF2, the respective SFF can log the heavy usage information and pass it along to the intelligence gathering database which can encode this info for consumption by the flow classifier/director.

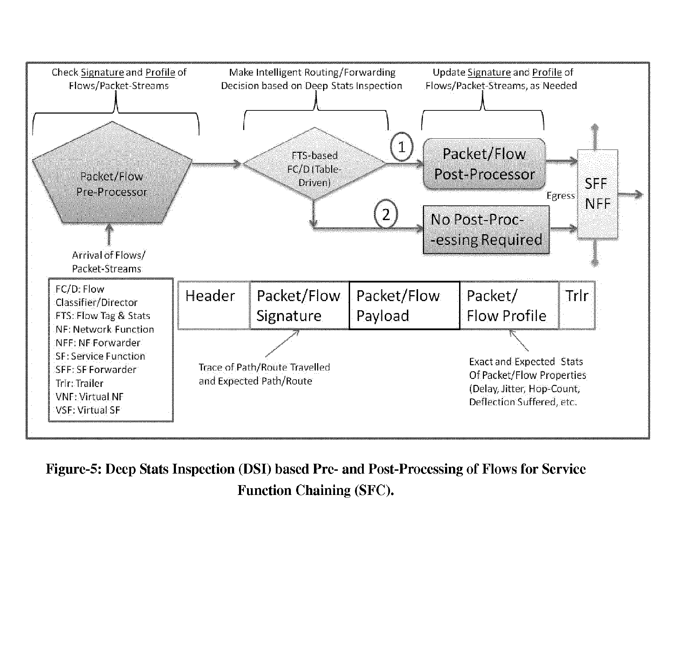

Figure 5 demonstrates Deep Stats Inspection (DSI) based pre- and post-processing of flows for Service Function Chaining (SFC). It is noted that if a flow cannot be routed through the desired outgoing path, both profile (impairment count) and signature are updated in the post-processor before directing a flow to the Service/Network Function Forwarder (SFF/NFF).

Although embodiments of the present disclosure have been described in detail, those skilled in the art should understand that they may make various changes, substitutions and alterations herein without departing from the spirit and scope of the present disclosure. Accordingly, all such changes, substitutions and alterations are intended to be included within the scope of the present disclosure as defined in the following claims.

## Claims

1. A method for deep stats inspection based on smart analytics of one or more packet streams comprising
gathering intelligence about a condition of one or more of a service function, a network function, a service function forwarder or a network function forwarder;
storing the intelligence in a database;
coding the intelligence for utilization by a flow classifier; and
embedding the intelligence in a header or a trailer, or both the header and the trailer, of the one or more packet streams, wherein the intelligence provides historical and predicted information about a life-cycle of packets and flows in a network.

2. The method of claim 1 wherein the information is based on one or more of estimation analysis and time series analysis.

3. The method of claim 1, wherein the one or more packet streams pass through a series of service functions;
or
the one or more packet streams pass through a series of network functions;
or
the one or more packet streams pass through a combination of service functions and network functions.

4. The method of claim 1, wherein the header or the trailer, or both the header and the trailer, comprise a profile of a service that is generating network traffic and a signature of a chain or path or route of where the one or more packet streams have traversed and where the one or more packet streams are expected to traverse.

5. The method of claim 4, wherein the embedded intelligence is in a network and is in the form of a stat and or a signature and wherein the stat or the signature is carried through a trajectory of flow in the network.

6. The method of claim 1, further comprising predicting a lifecycle or a future flow of the one or more packet streams in the network, or a lifecycle and a future flow of the one or more packet streams in the network.

7. The method of claim 5, wherein a service function forwarder or a network function forwarder utilizes the predicted lifecycle or future flow of the one or more packet streams in the network, or the predicted lifecycle and future flow of the one or more packet streams in the network, to make intelligent chaining and forwarding decisions.

8. The method of claim 1, wherein the conditions of one or more of a service function, a network function, a service function forwarder or a network function forwarder comprise information concerning behavior and pattern of usage of a resource, preferably, the resource is one or more of a process, a CPU, a memory, a storage, a buffer, or a bandwidth;
or
the conditions of one or more of a service function, a network function, a service function forwarder or a network function forwarder comprise information concerning behavior and pattern of one or more errors of a resource;
or
the conditions of one or more of a service function, a network function, a service function forwarder or a network function forwarder comprise information concerning behavior and pattern of one or more reroute logs of a resource.

9. The method of claim 1, wherein the intelligence comprises one or more of
i) an origin of the one or more packet streams;
ii) a first history of how the one or more packet streams moved through network nodes or links, or both the network nodes and the links;
iii) a second history of how the use of resources changed over time; and
iv) a third history of how the movements of the one or more packet streams changed over time.

10. The method of claim 9, wherein the origin of the one or more packet streams is a local address;
or
the origin of the one or more packet streams is a physical address;
or
the origin of the one or more packet streams is a geo-location.

11. The method of claim 9, wherein the first history of how the one or more packet streams moved through network nodes or links, or both the network nodes and the links, comprises an expected traversal of network links or network nodes, or both the network nodes and the links;
or
the first history of how the one or more packet streams moved through network nodes and/or links comprises an actual traversal of network links and/or network nodes.

12. The method of claim 9, wherein the second history of how the use of resources changed over time comprises an average of duration and amount of usage of one or more of process resources, CPU resources, memory resources, storage resources, buffer resources, and bandwidth resources;
or
the second history of how the use of resources changed over time comprises a variance of duration and amount of usage of one or more of process resources, CPU resources, memory resources, storage resources, buffer resources, and bandwidth resources;
or
the second history of how the use of resources changed over time comprises a standard deviation of duration and amount of usage of one or more of process resources, CPU resources, memory resources, storage resources, buffer resources, and bandwidth resources.

13. A system for deep stats inspection based on smart analytics of packet streams comprising
one or more of a service function;
one or more of a service function forwarder;
one or more of a network function forwarder;
one or more of a network function; and
a flow classifier.

14. The system of claim 13, wherein the flow classifier receives a packet stream comprising coded intelligence.

15. The system of claim 14, wherein the flow classifier routes the packet stream comprising coded intelligence though one or more of the service functions;
or
the flow classifier routes the packet stream comprising coded intelligence though one or more of the service function forwarders;
or
the flow classifier routes the packet stream comprising coded intelligence though one or more of the network function forwarders;
or
the flow classifier routes the packet stream comprising coded intelligence though one or more of the network functions;
or
the flow classifier routes the packet stream comprising coded intelligence though one or more of the service function forwarders and one or more of the service functions;
or
the flow classifier routes the packet stream comprising coded intelligence though one or more of the network function forwarders, one or more of the service function forwarders, one or more of the service functions, and one or more of the network functions.

16. The system of claim 14, wherein the packet stream comprises a header, a packet signature, a packet payload, a packet profile and a trailer.

17. The system of claim 16, wherein the packet signature comprises a history of how the one or more packet streams moved through network nodes and/or links and an expected path of the packet through network nodes and/or links.

18. The system of claim 16, wherein the packet profile comprises a historical statistic of a packet property, preferably, the packet property is selected from delay, jitter, hop-count, and deflection suffered;
or
the packet profile comprises an expected statistic of a packet property, preferably, the packet property is selected from delay, jitter, hop-count, and deflection suffered.
